# FASCICULE DE BREVET EUROPEEN

(11) **EP 0 973 153 B1**
(45) Date de publication et mention de la délivrance du brevet: **14.02.2007**
(21) Numéro de dépôt: 99202235.0
(22) Date de dépôt: 08.07.1999
(51) Int. Cl.: G11B 5/02, G11B 5/09, G11B 5/035, G11B 5/40

(54) **Dispositif de lecture d'informations magnétiques**
Magnetische Informationslesevorrichtung
Magnetic information read device

(30) Priorité: 17.07.1998 FR 9809160
(43) Date de publication de la demande: 19.01.2000
(73) Titulaire: Koninklijke Philips Electronics N.V., 5621 BA Eindhoven (NL)
(72) Inventeur: Leclerc, Patrick, 75008 Paris (FR); Pieraerts, Eric, 75008 Paris (FR); Ramalho, Joao, 75008 Paris (FR); Barbotin, Jean, 75008 Paris (FR); Voorman, Hans, 75008 Paris (FR)
(74) Mandataire: van Oudheusden-Perset, Laure E.

(56) Documents cités:
- EP-A- 0 805 437
- EP-A- 0 829 733
- EP-A- 0 853 310
- US-A- 5 270 882
- US-A- 5 390 054
- US-A- 5 412 518
- US-A- 5 426 542
- DATABASE WPI Section EI, Week 9748 Derwent Publications Ltd., London, GB; Class T03, AN 97-518149 XP002098289 -& JP 09 245304 A (HITACHI LTD), 19 septembre 1997 (1997-09-19) -& PATENT ABSTRACTS OF JAPAN vol. 98, no. 1, 30 janvier 1998 (1998-01-30) & JP 09 245304 A

## Description

La présente invention concerne un dispositif de lecture d'informations magnétiques, muni d'au moins une tête de lecture comprenant au moins un barreau magnéto-résistif destiné à générer des impulsions dites de données représentatives d'informations lues par la tête.

De tels dispositifs de lecture sont couramment utilisés pour lire des informations stockées sur des disques durs pour ordinateurs. Ces disques présentent généralement une face magnéto-sensible destinée à être survolée par la tête de lecture. Un mouvement de rotation est imprimé au disque, tandis que la tête de lecture est assujettie à un bras qui lui imprime un mouvement radial. La surface du disque est subdivisée en une multitude de sous-surfaces, lesquelles sont le siège d'un champ magnétique local dont le signe représente une information binaire.

Le fonctionnement des dispositifs de lecture usuels repose sur le fait que lorsque le barreau magnéto-résistif est soumis à un champ magnétique, sa résistivité varie.

Dans la plupart des dispositifs de lecture d'informations magnétiques existants, le barreau magnéto-résistif est polarisé, soit au moyen d'un courant de polarisation continu de valeur prédéterminée traversant ledit barreau, auquel cas la variation de résistivité génère une impulsion de tension, soit au moyen d'une tension de polarisation continue de valeur prédéterminée appliquée aux bornes dudit barreau, auquel cas la variation de résistivité génère une impulsion de courant.

Dans les deux cas précités, plus la valeur prédéterminée sera élevée, plus l'amplitude des impulsions générées, appelées impulsions de données, sera grande. Il peut donc paraître avantageux de choisir la valeur prédéterminée la plus élevée possible, dans le but d'obtenir un rapport signal/bruit le plus important possible. Toutefois, la valeur préderminée conditionne également la puissance que le barreau magnéto-résistif sera amené à dissiper. Ainsi, une valeur prédéterminée trop grande peut mener à une usure prématurée du barreau magnéto-résistif du fait d'une trop grande dissipation permanente par effet Joule. De plus, l'amplitude importante des impulsions de données résultant d'un tel choix peut provoquer l'apparition d'impulsions de puissance trop importantes pour être dissipées sans dommage par le barreau, et conduire à la destruction de celui-ci. Il apparaît donc que le choix de la valeur prédéterminée relève d'un compromis entre un rapport signal/bruit optimal pour les impulsions de données, d'une part, et une minimisation de l'usure et des risques de claquage du barreau magnéto-résistif, c'est-à-dire une minimisation de la puissance dissipée par ledit barreau, d'autre part.

Dans l'état actuel de la technique, diverses méthodes de sélection de la valeur prédéterminée sont employées, toutes faisant appel à la valeur que prend la résistance du barreau magnéto-résistif lorsque celui-ci n'est en présence d'aucune information magnétique. Cette valeur, appelée résistance de repos, est en effet primordiale pour calculer l'amplitude qu'auront les impulsions de données, d'une part, et la puissance dissipée dans le barreau, d'autre part. La valeur de la résistance de repos est donc réputée indispensable pour déterminer le meilleur compromis selon le principe exposé ci-dessus.

Les dispositifs de lecture connus incorporent donc un système de mesure de la résistance de repos, qui est le plus souvent complexe et nécessite une surface importante de silicium pour sa réalisation sous forme intégrée, et un temps non-négligeable pour opérer la mesure proprement dite. La mesure de la résistance de repos implique donc un surcoût, à la fois dans la fabrication du dispositif de lecture et dans sa mise en oeuvre.

La présente invention a pour but de remédier à ces inconvénients en proposant un dispositif de lecture d'informations magnétiques dans lequel la polarisation du barreau magnéto-résistif ne nécessite pas une mesure préalable de la résistance de repos. Un dispositif de lecture d'informations magnétiques utilisant une boucle de régulation de la puissance dissipée dans le barreau magnéto-résistif est connu du document EP 0 829 733 A2.

En effet, un dispositif de lecture d'informations magnétiques conforme au paragraphe introductif est caractérisé selon l'invention en ce qu'il est muni d'une boucle de régulation de la puissance dissipée dans le barreau magnéto-résistif, la boucle de régulation possédant une constante de temps importante devant la durée des impulsions de données.

Dans un tel dispositif de lecture, il n'est plus question de mesurer la résistance de repos et d'en déduire une valeur prédéterminée optimale pour un courant ou une tension de polarisation. Il suffira au contraire de choisir une valeur optimale pour la puissance que devra dissiper le barreau magnéto-résistif, la boucle de régulation ajustant automatiquement les conditions de fonctionnement dudit barreau pour qu'il dissipe effectivement cette puissance. Le fait que la constante de temps de la boucle de régulation soit importante devant la durée des impulsions de données permet d'éviter que la boucle ne déforme ces impulsions en tentant de leur appliquer une régulation inopportune. Seuls des paramètres continus régissant la polarisation du barreau sont ainsi régulés. Les impulsions de données ne sont pas affectées par la régulation de puissance, les informations qu'elles représentent étant donc exemptes de toute altération.

Dans un mode de réalisation de l'invention, la boucle de régulation comprend des moyens de régulation pour ajuster simultanément la valeur d'un courant traversant le barreau magnéto-résistif et celle d'une tension présente aux bornes dudit barreau, la boucle de régulation étant contrôlée par un signal de commande dont la valeur est représentative de la valeur, dite régulée, de la puissance que le barreau doit dissiper.

Cette structure de la boucle de régulation permet de déterminer simplement la valeur régulée par le choix de la valeur du signal de commande qui contrôle ladite boucle via les moyens de régulation.

Dans un mode de réalisation particulier de l'invention, la boucle de régulation inclut un multiplieur de courant destiné à recevoir un premier courant représentatif du signal de commande, un deuxième courant représentatif du courant traversant le barreau magnéto-résistif, et un troisième courant représentatif de la tension présente aux bornes dudit barreau, multiplieur destiné à générer un quatrième courant dont le carré de la valeur est proportionnel au quotient entre les valeurs des deuxième et troisième courants, multiplié par la valeur du premier courant.

Il sera démontré dans la suite de l'exposé que le multiplieur de courant permet de générer un signal, matérialisé par le quatrième courant, dont la valeur est indépendante des paramètres électriques régissant le fonctionnement du dispositif, et en particulier des courant et tension de polarisation du barreau magnéto-résistif. Ce signal, exclusivement représentatif de la valeur régulée et de la résistance de repos, permet de contrôler aisément les moyens de régulation.

Dans un mode de réalisation avantageux de l'invention, les moyens de régulation comprennent un comparateur destiné à délivrer un signal de sortie représentatif de la différence entre le quatrième courant et le courant traversant le barreau magnéto-résistif, et un transistor, dont la conduction est contrôlée par le signal de sortie du comparateur, transistor dont le trajet de courant principal est disposé en série avec le barreau magnéto-résistif.

Cette structure des moyens de régulation, avantageuse par sa simplicité, permet un contrôle simultané des courant et tension de polarisation, au seul moyen du quatrième courant.

Dans une variante de ce mode de réalisation, la boucle de régulation comporte un élément capacitif, destiné à mémoriser la valeur du signal de sortie du comparateur, élément capacitif dont la valeur est suffisamment importante pour que la durée des impulsions de données soit négligeable devant la constante de temps de la boucle de régulation ainsi obtenue.

La mémorisation du signal de sortie du comparateur permet de verrouiller les réglages effectués lors de la régulation. De plus, la constante de temps de la boucle de régulation dépend, dans ce mode de réalisation, de la valeur de l'élément capacitif. Il suffira donc d'agir sur cette valeur pour ajuster la valeur de ladite constante de temps.

Dans un mode de réalisation préféré de l'invention, la boucle de régulation comporte un registre destiné à mémoriser une valeur numérique du signal de commande, et un convertisseur numérique/analogique destiné à recevoir et à transformer le contenu dudit registre en un courant analogique constituant le premier courant.

Ce mode de réalisation préféré de l'invention permet de programmer numériquement la valeur régulée, ce qui est particulièrement avantageux dans le cadre d'applications dans le domaine des disques durs pour ordinateurs, au sein desquels les informations transitent sous forme numérique.

L'invention sera mieux comprise à l'aide de la description suivante, faite à titre d'exemple non-limitatif et en regard des dessins annexés, dans lesquels :
- la figure 1 est un schéma fonctionnel partiel décrivant un dispositif de lecture d'informations selon un mode de réalisation de l'invention,
- la figure 2 est un schéma électrique décrivant un multiplieur de courant inclus dans un tel dispositif de lecture,
- la figure 3 est un schéma électrique décrivant une source de courant présente dans un tel multiplieur de courant, et
- la figure 4 est un schéma fonctionnel décrivant un mode de réalisation préféré d'une entrée de commande de la boucle de régulation.

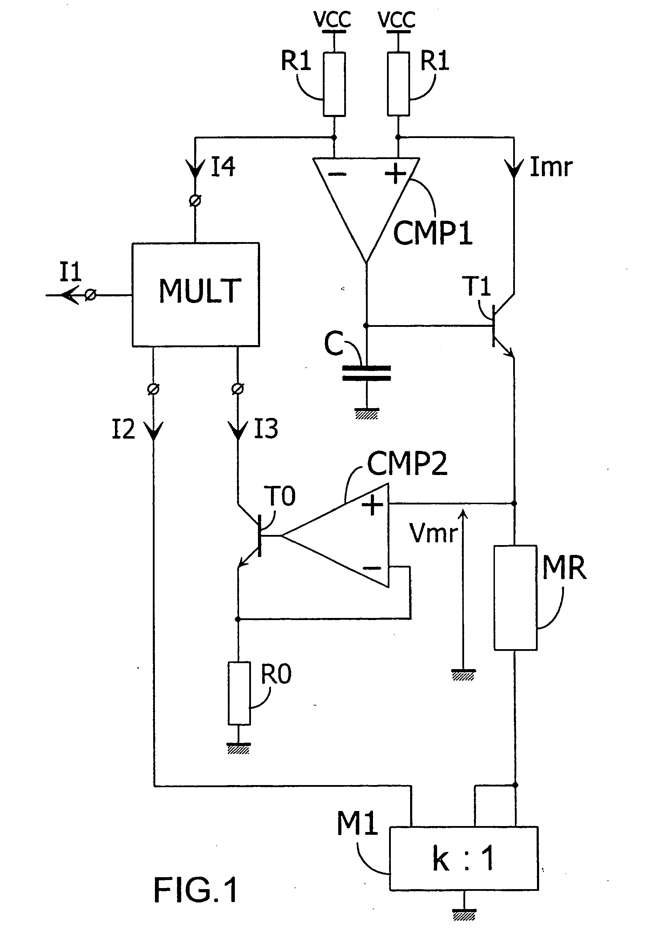

La figure 1 est un schéma fonctionnel qui représente partiellement un dispositif de lecture d'informations magnétiques conforme à un mode de réalisation particulier de l'invention. Ce dispositif est muni d'au moins une tête de lecture comprenant au moins un barreau magnéto-résistif MR destiné à générer des impulsions dites de données représentatives d'informations lues par la tête. Le dispositif est muni d'une boucle de régulation de la puissance dissipée dans le barreau magnéto-résistif MR. La boucle de régulation possède une constante de temps importante devant la durée des impulsions de données, et est contrôlée par un signal de commande dont la valeur est représentative de la valeur, dite régulée, de la puissance que le barreau doit dissiper. La boucle de régulation comprend des moyens de régulation, pour ajuster simultanément la valeur d'un courant Imr traversant le barreau magnéto-résistif MR et celle d'une tension Vmr présente aux bornes dudit barreau MR. Ces moyens de régulation comprennent, dans ce mode de réalisation de l'invention, un premier comparateur CMP1 et un premier transistor T1, dont la conduction est contrôlée par le signal de sortie du comparateur CMP1, transistor T1 dont le trajet de courant principal est disposé en série avec le barreau magnéto-résistif MR, et est donc destiné à être parcouru par le courant Imr.

Dans ce mode de réalisation de l'invention, la boucle de régulation inclut un multiplieur de courant MULT destiné à recevoir un premier courant I1 représentatif du signal de commande, un deuxième courant I2 représentatif du courant traversant le barreau magnéto-résistif MR, et un troisième courant I3 représentatif de la tension Vmr présente aux bornes dudit barreau MR, multiplieur MULT destiné à générer un quatrième courant I4 dont le carré de la valeur est proportionnel au quotient entre les valeurs des deuxième et troisième courants I2 et I3, multiplié par la valeur du premier courant I1.

Le multiplieur de courant MULT permet de générer un signal, matérialisé par le quatrième courant I4, dont la valeur est indépendante des paramètres électriques régissant le fonctionnement du dispositif, et en particulier des courant et tension de polarisation Imr et Vmr du barreau magnéto-résistif MR. Ce signal, exclusivement représentatif de la valeur régulée, que l'on notera Preg, et de la résistance de repos que l'on notera Rmr, permet de contrôler aisément les moyens de régulation. Deux méthodes peuvent en effet être utilisées pour réguler la puissance dissipée par le barreau magnéto-résistif MR. Chacune d'entre elles repose sur une interprétation de la loi d'Ohm. Selon une première méthode, la valeur régulée Preg est égale au produit entre la tension Vmr présente aux bornes du barreau magnéto-résistif MR et le courant Imr parcourant ledit barreau. Un courant I4' devant servir au contrôle des moyens de régulation, analogue au quatrième courant I4, s'écrirait donc I4'=Preg/Vmr. Or, la tension Vmr est sujette à variation et une boucle de régulation utilisant ce signal comme paramètre de base risque de devenir instable. La deuxième méthode, dont l'implémentation est réalisée, dans le mode de réalisation décrit par la Figure 1, grâce au multiplieur de courant MULT, est plus avantageuse car ne présentant pas les risques d'instabilité décrits ci-dessus. Cette méthode repose sur le fait que la valeur régulée Preg est égale au produit entre la résistance de repos Rmr et le carré du courant Imr qui traverse le barreau magnéto-résistif. Ainsi, le carré du courant I4 s'écrit I4²=Preg/Rmr. La valeur régulée étant fixée et la résistance de repos étant une grandeur physique fixe car intrinsèque au barreau magnéto-résistif, la valeur du signal I4 qui contrôle les moyens de régulation est fixe, ce qui contribue grandement à la stabilité de la boucle de régulation. Le deuxième courant 12 est la reproduction, via un miroir de courant M1 multiplicateur de coefficient k, du courant Imr traversant le barreau magnéto-résistif MR : I2=k.Imr. Le troisième courant I3 est proportionnel à la tension Vmr présente aux bornes dudit barreau MR : I3=k'.Vmr/R0, la valeur de la constante k' dépendant des gains d'un deuxième comparateur CMP2 et d'un transistor T0 utilisés pour générer le troisième courant I3 selon une technique bien connue de l'homme du métier. Le carré de la valeur du quatrième courant I4 généré par le multiplieur MULT est proportionnel au quotient entre les deuxième et troisième courants I2 et I3, multiplié par la valeur du premier courant I1, ce qui s'écrit I4²=k".I1.(I2/I3). En remplaçant dans cette dernière expression les deuxième et troisième courants I2 et I3 par leurs valeurs, on obtient I4²=k.k".I1.(Imr.R0)/(Vmr.k'). Selon la loi d'Ohm, Vmr=Rmr.Imr, ce qui permet d'écrire I4²=k.k".I1.R0/(Rmr.k'). Si le courant I1 est proportionnel à une valeur P0 représentative de la valeur régulée Preg, on obtient I4²=K.P0/Rmr, où K est une constante multiplicative qui intègre les constantes k, k' et k'', ainsi que la résistance R0. Le multiplieur de courant MULT produit donc un signal de contrôle des moyens de régulation, matérialisé par le courant I4, qui dépend uniquement de la valeur régulée Preg et de la valeur de la résistance de repos Rmr. L'avantage fondamental de l'invention est bien mis en valeur dans ce mode de réalisation : en effet, la valeur de la résistance de repos Rmr, bien qu'inconnue, intervient implicitement dans la régulation de puissance, ce qui rend sa mesure inutile à la polarisation du barreau magnéto-résistif MR.

Les moyens de régulation fonctionnent de la manière suivante : la valeur du quatrième courant I4 délivré par le multiplieur de courant MULT est celle que doit prendre le courant de polarisation Imr traversant le barreau magnéto-résistif MR pour que la valeur de la puissance dissipée par ce dernier soit égale à la valeur régulée Preg. Si le courant de polarisation Imr est plus faible que le quatrième courant I4, une tension V- présente à la borne inverseuse du premier comparateur CMP1, qui s'écrit V-=VCC-R1.I4, est inférieure à une tension V+ présente à la borne non-inverseuse dudit comparateur CMP1, qui s'écrit V+=VCC-R1.Imr. Le premier comparateur CMP1 délivre alors sur sa sortie, qui est connectée à la base du transistor T0, une tension commandant une augmentation de la conduction dudit transistor T0. Le courant de polarisation Imr, ainsi que la tension de polarisation Vmr, augmentent alors, jusqu'à ce que la valeur du courant de polarisation Imr devienne égale à celle du quatrième courant I4. La boucle de régulation de puissance atteint alors son équilibre, et on a Imr=I4, soit encore Rmr.Imr=K.P0. Si l'on choisit P0=Preg/K, la valeur de la puissance dissipée dans le barreau magnéto-résistif MR, Rmr.Imr, est égale à la valeur régulée Preg. La tension de polarisation Vmr est mémorisée via la capacité C, dont la valeur détermine la constante de temps de la boucle de régulation. Une valeur de C de l'ordre de 150pF, donnera, par exemple, dans les technologies de réalisation de circuits intégrés actuelles, une constante de temps de l'ordre de 100ms, ce qui est suffisant pour ne pas perturber les impulsions de données.

Le premier comparateur CMP1 sera avantageusement réalisé de sorte que sa caractéristique de transfert soit non-linéaire, c'est-à-dire que de faibles différences entre les tensions aux bornes inverseuse et non-inverseuse V- et V+ ne génèreront que de faibles variations dans le signal de sortie du premier comparateur CMP1, tandis que de fortes différences entre les tensions aux bornes inverseuse et non-inverseuse V- et V+ génèreront de fortes variations dans le signal de sortie du premier comparateur CMP1.

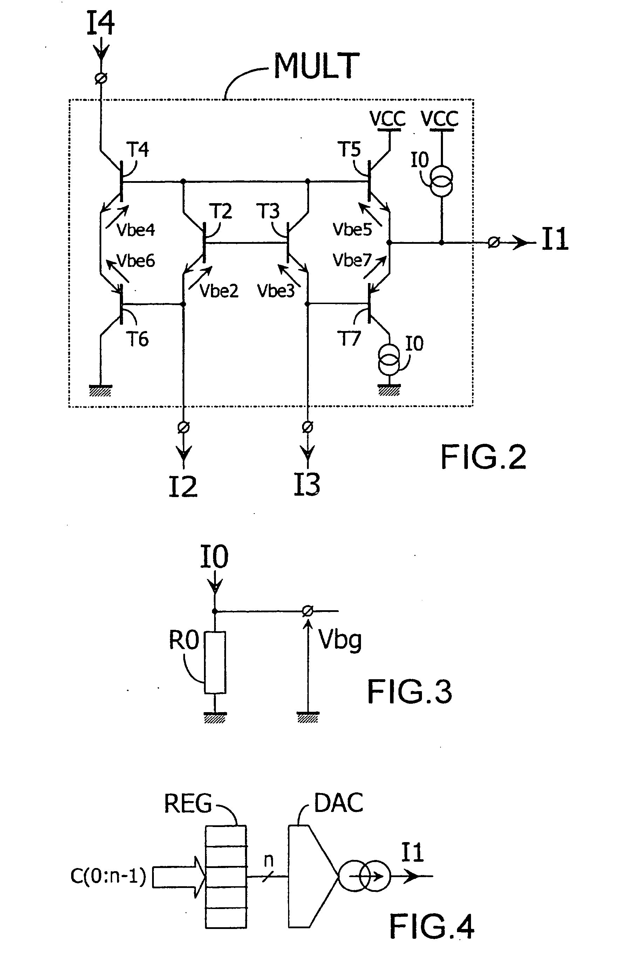

La figure 2 est un schéma électrique qui illustre un mode de réalisation du multiplieur de courant MULT. Il va sans dire que d'autres modes de réalisation existent et sont à la portée de l'homme du métier. Dans ce mode de réalisation, le multiplieur MULT comporte :
- un deuxième et un troisième transistor de type NPN, T2 et T3, dont les bases sont reliées ensemble, dont les collecteurs sont reliés ensemble, et dont les émetteurs sont respectivement destinés à recevoir les deuxième et troisième courants I2 et I3,
- un quatrième et un cinquième transistor de type NPN, T4 etTS, dont les bases sont reliées ensembles aux collecteurs des deuxième et troisième transistors T2 et T3, le collecteur du quatrième transistor T4 étant destiné à délivrer le quatrième courant I4, le collecteur du cinquième transistor T5 étant relié à une borne positive d'alimentation VCC, et
- un sixième et un septième transistor de type PNP, T6 et T7, dont les émetteurs sont respectivement reliés aux collecteurs des deuxième et troisième transistors T2 et T3, le collecteur du sixième transistor T6 étant directement relié à la masse, le collecteur du septième transistor T7 étant relié à la masse via une source de courant I0, le noeud intermédiaire entre les émetteurs des cinquième et septième transistors T5 et T7 formant une entrée destinée à recevoir le premier courant I1, ladite entrée étant par ailleurs reliée à la borne positive d'alimentation VCC via une autre source de courant I0.

Le fonctionnement du multiplicateur MULT repose sur les équations suivantes : D'une part, **Σ**Vbei = 0, où Vbei est la tension base-émetteur du transistor Ti, et d'autre part Vbei=V_{T}.ln(Ici/Ios), où V_{T} est égal au produit entre la constante de Boltzmann et la température absolue, que divise la charge de l'électron, Ici étant le courant de collecteur du transistor Ti et Ios un courant constant dont la valeur est directement liée à la surface du transistor Ti. Les transistors composant le multiplieur MULT ayant des tailles sensiblement égales, les deuxième et troisième courants I2 et I3 étant respectivement égaux à k.Imr et k'.Vmr/R0, le quatrième courant I4 peut aisément être exprimé par l'homme du métier sous la forme I4²=K1.R0.I0.I1.Imr/Vmr, soit encore I4²=K1.R0.I0.I1/Rmr, car Vmr=Rmr.Imr, KI intégrant les constantes k et k'.

La figure 3 illustre un mode de réalisation des sources de courant I0. Chacune d'elles comprend une résistance R0, soumise à une tension Vbg, qui proviendra avantageusement d'un générateur de tension de type « bandgap », et sera donc constante et indépendante de la température. Ainsi, I0=Vbg/R0, et l'on obtiendra pour I4 l'expression suivante : I4²=K1.Vbg.I1/Rmr, soit encore, puisque le premier courant I1 est proportionnel à une valeur P0 représentative de la valeur régulée Preg, I4²=K.P0/Rmr.

La figure 4 illustre un mode d'obtention du premier courant I1 à partir d'un signal de commande C(0:n-1) de nature numérique. Ce signal de commande C(0:n-1) est mémorisé dans un registre REG de n bits, puis converti en analogique au moyen d'un convertisseur numérique/analogique DAC, qui délivre le premier courant I1. Il suffira alors d'insérer entre le convertisseur DAC et le multiplieur un miroir de courant, non-représenté sur la figure, afin que le multiplieur reçoive le premier courant I1 dans le sens adéquat. Ce mode de réalisation préféré de l'invention permet de programmer numériquement la valeur régulée Preg, ce qui est particulièrement avantageux dans le cadre d'applications dans le domaine des disques durs pour ordinateurs, au sein desquels les informations transitent sous forme numérique.

## Revendications

1. Dispositif de lecture d'informations magnétiques muni d'au moins une tête de lecture comprenant au moins un barreau magnéto-résistif (MR) destiné à générer des impulsions dites de données représentatives d'informations lues par la tête, muni d'une boucle de régulation de la puissance dissipée dans le barreau magnéto-résistif, **caractérisé en ce que** la boucle de régulation possédant une constante de temps importante devant la durée des impulsions de données.

2. Dispositif de lecture d'informations magnétiques selon la revendication 1, où la boucle de régulation comprend des moyens de régulation pour ajuster simultanément la valeur d'un courant (Imr) traversant le barreau magnéto-résistif et celle d'une tension (Vmr) présente aux bornes dudit barreau, la boucle de régulation étant contrôlée par un signal de commande dont la valeur est représentative de la valeur, dite régulée, de la puissance que le barreau doit dissiper.

3. Dispositif de lecture d'informations magnétiques selon la revendication 2, où la boucle de régulation inclut un multiplieur de courant (MULT) destiné à recevoir un premier courant (I1) représentatif du signal de commande, un deuxième courant (I2) représentatif du courant traversant le barreau magnéto-résistif, et un troisième courant (I3) représentatif de la tension présente aux bornes dudit barreau, multiplieur destiné à générer un quatrième courant (I4) dont le carré de la valeur est proportionnel au quotient entre les valeurs des deuxième et troisième courants, multiplié par la valeur du premier courant.

4. Dispositif de lecture d'informations magnétiques selon la revendication 3, où les moyens de régulation comprennent un comparateur (CMP1) destiné à délivrer un signal de sortie représentatif de la différence entre le quatrième courant et le courant traversant le barreau magnéto-résistif, et un transistor (T1) dont la conduction est contrôlée par le signal de sortie du comparateur, transistor dont le trajet de courant principal est disposé en série avec le barreau magnéto-résistif.

5. Dispositif de lecture d'informations magnétiques selon la revendication 4, où la boucle de régulation comporte un élément capacitif, (C') destiné à mémoriser la valeur du signal de sortie du comparateur, élément capacitif dont la valeur est suffisamment importante pour que la durée des impulsions de données soit négligeable devant la constante de temps de la boucle de régulation ainsi obtenue.

6. Dispositif de lecture d'informations magnétiques selon l'une des revendications 3 à 5 où, le signal de commande étant de nature numérique, la boucle de régulation comporte un registre (REG) destiné à mémoriser la valeur du signal de commande, et un convertisseur numérique/analogique (DAC) destiné à recevoir et à transformer le contenu dudit registre en un courant analogique constituant le premier courant.

## Claims

1. A device for reading magnetic information, the device having at least one read head comprising at least one magnetoresistive bar (MR) intended for generating data pulses which represent information read by the head, and having a control loop for controlling the power dissipated in the magnetoresistive bar, **characterized in that** the control loop has a time constant which is large with respect to the duration of the data pulses.

2. A device for reading magnetic information, as claimed in Claim 1, wherein the control loop includes regulating means for simultaneously regulating the value of a current (Imr) flowing through the magnetoresistive bar and the value of a voltage (Vmr) present on the terminals of said bar, the control loop being controlled by a control signal whose value is representative of a regulated value of the power which is to be dissipated by said bar.

3. A device for reading magnetic information, as claimed in Claim 2, wherein the control loop includes a current multiplier (MULT) arranged to receive a first current (I1) representative of the control signal, a second current (12) representative of the current flowing through the magnetoresistive bar, and a third current (I3) representative of the voltage present on the terminals of said bar, which multiplier is intended for generating a fourth current (14) whose squared value is proportional to the quotient of the values of the second and the third current, multiplied by the value of the first current.

4. A device for reading magnetic information, as claimed in Claim 3, wherein the regulating means comprise a comparator (CMP1) intended for supplying an output signal representative of the difference between the fourth current and the current flowing though the magnetoresistive bar, and a transistor (T1), whose conduction is controlled by the output signal of the comparator, which transistor has its main current path arranged in series with the magnetoresistive bar.

5. A device for reading magnetic information, as claimed in Claim 4, wherein the control loop includes a capacitive element (C) intended for storing the value of the output signal of the comparator, which capacitive element has a value which is large enough to ensure that the duration of the data pulses is negligible with respect to the time constant of the control loop thus obtained.

6. A device for reading magnetic information, as claimed in any one of claims 3 to 5, wherein, as the control signal is of a digital nature, the control loop includes a register (REG) intended for storing the value of the control signal, and a digital-to-analog converter (DAC) intended for receiving the content of said register and for converting said content into an analog current forming the first current.

## Patentansprüche

1. Magnetische Informationslesevorrichtung, versehen mit mindestens einem Lesekopf mit mindestens einem magnetoresistiven Stab (MR), dafür bestimmt, sogenannte Datenimpulse zu erzeugen, die repräsentativ für von dem Kopf gelesene Informationen sind, versehen mit einer Schleife zur Regelung der Leistung, die in dem magnetoresistiven Stab dissipiert wird, **dadurch gekennzeichnet, dass** die Regelschleife eine bedeutende Zeitkonstante vor der Dauer der Datenimpulse aufweist.

2. Magnetische Informationslesevorrichtung nach Anspruch 1, wobei die Regelschleife Regelmittel für die gleichzeitige Angleichung des Werts eines Stroms (Imr) enthält, der durch den magnetoresistiven Stab fließt, und des Werts einer Spannung (Vmr), an den Klemmen des besagten Stabs vorhanden, wobei die Regelschleife von einem Steuersignal gesteuert wird, dessen Wert für den so genannten geregelten Wert der Leistung repräsentativ ist, den der Stab dissipieren muss.

3. Magnetische Informationslesevorrichtung nach Anspruch 2, wobei die Regelschleife einen Strommultiplikator (MULT) enthält, dafür bestimmt, einen ersten Strom (I1) zu erhalten, repräsentativ für das Steuersignal, einen zweiten Strom (12), repräsentativ für den Strom, der durch den magnetoresistiven Stab fließt, und einen dritten Strom (13), repräsentativ für die an den Klemmen des besagten Stabs vorhandene Spannung, wobei der Multiplikator dafür bestimmt ist, einen vierten Strom (14) zu erzeugen, dessen Wert im Quadrat proportional zum Quotienten des zweiten Stromwerts durch den dritten Stromwert ist, multipliziert mit dem Wert des ersten Stroms.

4. Magnetische Informationslesevorrichtung nach Anspruch 3, wobei die Mittel zur Regelung einen Vergleicher (CMP1) enthalten, dafür bestimmt, ein Ausgangssignal abzugeben, das repräsentativ ist für die Differenz zwischen dem vierten Strom und dem Strom, der durch den magnetoresistiven Stab fließt, und einen Transistor (T1), dessen Leitung vom Ausgangssignal des Vergleichers gesteuert wird, wobei der Hauptstromweg des Transistors in Serie mit dem magnetoresistiven Stab angeordnet ist.

5. Magnetische Informationslesevorrichtung nach Anspruch 4, wobei die Regelschleife ein kapazitives Element (C) enthält, dafür bestimmt, den Wert des Ausgangssignals des Vergleichers zu speichern, wobei der Wert des kapazitiven Elements ausreichend signifikant ist, damit die Dauer der Datenimpulse vor der Zeitkonstante der somit erhaltenen Regelschleife vernachlässigbar ist.

6. Magnetische Informationslesevorrichtung gemäß einem der Ansprüche 3 bis 5, wobei das Steuersignal digitaler Art ist, die Regelschleife ein Register enthält (REG), dafür bestimmt, den Wert des Steuersignals zu speichern, und einen Digital/Analog-Umsetzer (DAC), dafür bestimmt, den Inhalt des besagten Registers in einen analogen Strom, der den ersten Strom bildet, zu erhalten und zu wandeln.
